# EUROPEAN PATENT APPLICATION

(11) **EP 3 098 005 A1**
(43) Date of publication of application: **30.11.2016**
(21) Application number: 16171570.1
(22) Date of filing: 26.05.2016
(51) Int. Cl.: B23B 31/10, B23B 31/16

(54) **APPARATUS FOR ATTACHING A CARDAN SHAFT TUBE-YOKE TO THE CHUCK OF A CNC MACHINE**

(30) Priority: 28.05.2015 TR 201506506
(71) Applicant: Tirsan Kardan Sanayi Ve Ticaret Anonim Sirketi, 45030 Manisa (TR)
(72) Inventor: BAK , BÜLENT, Manisa (TR); KÜSBEC , HASAN, Manisa (TR); HABERC , KEMALETT N, Manisa (TR); KARADEM R, SADIK, Manisa (TR); AY, TUNCAY, Manisa (TR)
(74) Representative: Dereligil, Ersin

(57) **Abstract**

An apparatus (300) fixing a tube-yoke (200; see figure 1) of a universal joint to a CNC chuck (100) of a CNC (metal cutting) machine tool to enable the execution of the machining of the cross holes (see regions X and X1 of figure 1) and turned diameters (ØA, ØB; see region Y of figure 1) of the tube-yoke (200) in a single set-up without the removal of the tube-yoke (200) from the machine tool comprises a main body (301) and a main connection component (305) for fixing this main body (301) to the CNC chuck (100), a centering part (302) on which said tube-yoke (200) can be fixed, and which is fixed to the main body (301) via connection components (303, 310). The structure of the centering part enables the machining of the cross holes (see regions X and X1 of figure 1) and the turned diameters (ØA, ØB; see region Y figure 1) of the tube-yoke (200).

## Description

### The Related Art

The invention relates to a production method of tube-yoke made of cast or forged materials as a yoke of cardan shafts.

### The Prior Art

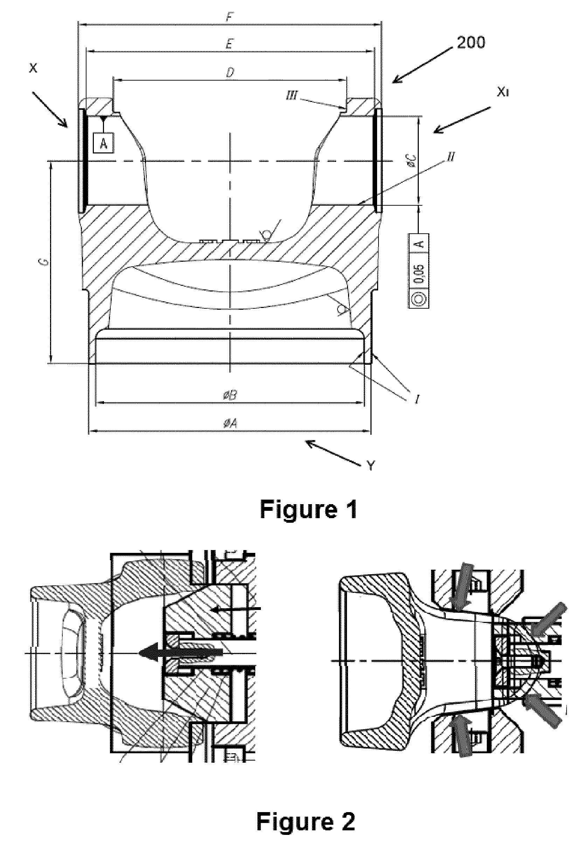

In the prior art, tube-yoke are firstly machined in CNC lathe machines via two-legged lathe chuck with the diameters ØA and ØB. In the first operation, in order to form the axis of the piece correctly in 3 dimensions, the tube-yoke is connected to the lathe chuck via special chucks that would make fixing by holding from the radiused regions over the lug and the side surfaces. With this method, the mismatch between the geometric axis with the center of mass is minimized. In this case, the part can be machined. ØA and ØB diameters are machined by the lathe operation and so the part is ready for the next operation. (See Figure 1 and Figure 2)

**Second operation:** Afterwards, the part is connected to the specially machined apparatuses to be held from ØA diameter, and ØC lug hole diameters and lug face surfaces are machined in the horizontal or vertical machining center. (See Figure 2) The lug hole axis machined in this operation has quite narrow concentricity and perpendicularity tolerance to the ØA cylinder axis. When the clearance found in the apparatuses produced for two different machining operation are considered, machining these two characteristics to be formed as a result of the first and the second operations within the tolerance band is quite hard.

In Figure 2; also, the face distances of the lug holes have quite narrow symmetricity tolerance with regard to ØA diameter axis. The above said apparatus clearance may also cause the symmetricity tolerance not be held within the desired levels from time to time.

In this method of machining the first operation with a lathe and the second operation with a separate workbench and apparatuses, the sum of the clearance from the apparatuses and the machine characteristics form the desired concentricity tolerance.

**Third operation:** Formation of the D lug space shown in Figure 1 and used in stacking operation and formed by milling is the operation number III.

In this operation; the lug space distance is machined by milling with using a separate apparatus. Dimension D is desired to be concentric according to the ØA turning diameter within a narrow tolerance band (See Figure 2).

Disadvantages similar to the ones disclosed in operation II are also encountered in this operation as a result of machining of lathe and milling operations in separate machines and apparatuses.

In summary, in order to produce a tube-yoke with these conventional methods, the part is required to be machined in 3 different operations, on 3 different machines and with 3 different chucks and apparatuses. In this case, in order to provide production within the required tolerance bands for the functional characteristics of the part, the tolerance is required to be distributed to said 3 different operations. This is not a preferred situation by the manufacturers.

### Technical problems of the prior art applications;

Since the part is machined with three different apparatuses and three different machines, the sum of the tolerances of three different operations form the tolerance of the finished part. This requires dividing the tolerance of the finished part into three and distributing it into three separate operations. As a result, the three separate operation tolerances are required to be quite narrow tolerance bands. Even, they cause defining tolerances that are impossible to obtain.

In the prior art applications, separate machines and separate mounting/demounting operations for each operation increases the total production time of the part. Additional workmanship requirement also causes inefficiency in separate workbenches.

### Description of the Invention

The novel machining method for the above disclosed part with three separate operations in conventional methods comprises connection of the part and making the 1st turning operation, 2nd lug hole opening operation, and 3rd lug space milling operation in a single stage so as to eliminate the apparatus clearance effect arising from all three operations. The disadvantage of clearance is taken under control by means of eliminating the disadvantage by a single operation.

The purpose of the invention is to provide a novel production method for tube-yoke production that is different from the prior art production techniques.

A purpose of the invention is to fix the tube-yoke to the machine in a single step. In this way, the time period for fixing and removing the part to and from three different machines is eliminated.

Another purpose of the invention is to ensure machining of higher amount of products in unit time compared to the prior art applications as a result of the single step fixing of the tube-yoke to the machines

Another purpose of the invention is to fix the part to an apparatus in a single step without allowing interaction between three separate operation tolerances. In this way, the operations are completed in a quick manner within the required tolerances without removing / demounting the part from the apparatus.

Another purpose of the invention is to ensure high speed and high amount of production with the novel production method. Moreover, the purpose is to provide a method that has reliable reproducibility within the required specification limits.

Another purpose of the invention is to choose a multi-station, multi-axis horizontal and vertical processing center.

Another purpose of the invention is to prevent division of the various tolerances in the part into three different machine and apparatus characteristics. The purpose of the invention is to provide production within a wide tolerance band and minimum production periods, and with high efficiency with a single fixing operation.

Another purpose of the invention is to perform production with the use of a single workbench instead of 3 different workbenches required for a tube-yoke, and a single operator instead of 3 operators.

Another purpose of the invention is to minimize workmanship processes by means of performing the processing on a single machine instead of performing loading, connecting, and unloading operations separately in 3 different machines.

Another purpose of the invention is to design and use a CNC processing program that would perform the 3 different operations of the tube-yoke in a single connection operation by means of a novel lathe chuck developed for this production method.

In order to achieve the above said purposes, an apparatus enabling positioning of the tube-yoke from X, X1, and Y axes in CNC machines performing machining, comprising:
- a main body and a main connection component connecting this main body to the CNC chuck, and
- a centering piece on which said tube-yoke is fixed, and which is fixed to the main body via connection components, and has a structure that enables performing machining in X, X1, and Y axes of the tube-yoke.

### Figures for Better Understanding of the Invention

Figure-1; is a two-dimensional section view of the tube-yoke in the invention.
Figure-2; is a two-dimensional section view showing the prior art production method of the tube-yoke.
Figure-3; is a two-dimensional side view showing the novel production method/technique.

### Reference Numbers

100- CNC Chuck
200- Tube-yoke
300- Apparatus
301- Main body
302- Centering part
303- Upper vertical connection component
304- Fixing tab
305- Main connection component
306- Pressure spring
307- Fixed hinge
308- Movable hinge
309- Mounting level
310- Lower horizontal connection components

### Detailed Description of the Invention

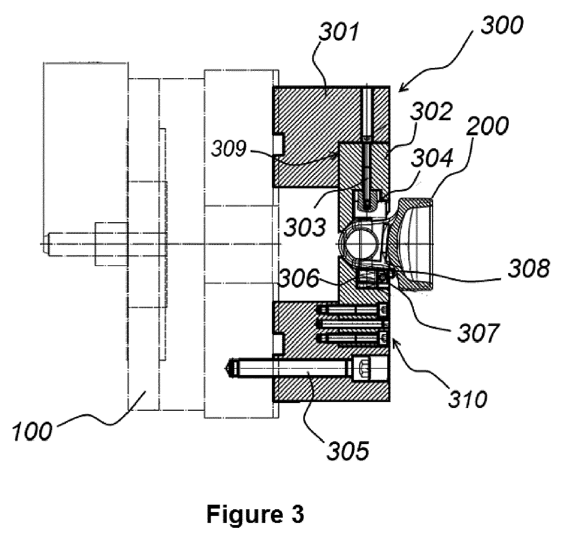

An apparatus (300) fixing the tube-yoke (200) to the CNC chuck (100) in CNC machines that perform machining (metal cutting) and ensuring conduction of machining operation in a single step in X, X1, and Y axis of the tube-yoke (200) without demounting any parts is representatively shown in Figure 3 with a two-dimensional section view. The apparatus (300) comprises a main body (301) and a main connection component (305) fixing this main body (301) to the CNC chuck (100). In addition, it comprises a centering part (302) on which said tube-yoke (200) is fixed, and which is fixed to the main body (301) via connection components, and has a structure that enables performing machining by connection of the tube-yoke (200) by defining in X, X1, and Y axis.

It comprises an upper vertical connection component (303) fixing said centering part (302) to the main body (301) on the vertical axis by means of a mounting level (309), and a fixing tab (304) fixed at the end of said upper vertical connection component (303) and holding the tube-yoke (200) during machining. It comprises a movable hinge (308) enabling clamping of said tube-yoke (200) during machining, and a pressure spring (306) ensuring that the tube-yoke (200) remains at the center from the lug axes, by applying thrust pressure on said movable hinge (308). In addition; it comprises a fixed hinge (307) providing connection between said centering part (302) and the movable hinge (308), and lower horizontal connection components (310) fixing said centering part (302) on the main body (301) on the horizontal axis.

The use and way of operation of the apparatus (300) according to the invention are as follows. As shown in Figure 3, the apparatus (300) is fixed to the CNC chuck (100) via the main connection component (305). The tube-yoke (200) is positioned by a robot arm via the fixed hinge (307) and the movable hinge (308) such that it would correspond to the centering part (302) clamping leg. That parts clamped by moving the centering part (302) clamping legs driven by a hydraulic system via the CNC chuck (100). By clamping the workpiece, it is brought to the axis via the centering part (302). The centering part (302) found in the region shown with X and X1 directs the piece in the direction of the bisectrix. The fixing tabs (304) are brought to the same axis direction by means of the hydraulic system from X and X1 region that are the lug hole axes of the tube-yoke (200). With a single connection of the tube-yoke (200), X, X1, and Y axis regions are processed by machining. In this way, performing machining in said axes without removing that part ensures precise labour and high quality. As a result, the labour and processes for mounting and demounting of the part are eliminated.

With the single step machining, the critical wall thickness variation formed between said inner and outer diameters of the tube-yoke (200) ***remain lower than 0.05.*** Lower symmetricity values are obtained by performing inter-lug milling with the same fixing. The movable hinge (308) centers the part so as to prevent axial mismatch in the part with regard to the tube diameter. More than one operation can be completed with a single fixing by means of performing the operations of opening lug holes and milling between lug holes with a single connection. Machining of the part with a single fixing minimizes the unwanted characteristics such as concentricity and axial mismatch, which cause balance problems in the final product.

## Claims

1. An apparatus (300) fixing the tube-yoke (200) to the CNC chuck (100) in CNC machines that perform machining (metal cutting) and ensuring conduction of machining operation in a single step in X, X1, and Y axis of the tube-yoke (200) without removing any part, and it is **characterized in that**; it comprises:
- a main body (301) and a main connection component (305) connecting this main body (301) to the CNC chuck (100),
- a centering part (302) on which said tube-yoke (200) is fixed, and which is fixed to the main body (301) via connection components, and has a structure that enables performing machining in X, X1, and Y axis of the tube-yoke (200).

2. An apparatus (300) according to Claim 1, **characterized in that**; it comprises an upper vertical connection component (303) fixing said centering part (302) to the main body (301) on the vertical axis by means of a mounting level (309).

3. An apparatus (300) according to Claim 1, **characterized in that**; it comprises a fixing tab (304) fixed at the end of said upper vertical connection component (303) and holding the tube-yoke (200) during machining.

4. An apparatus (300) according to Claim 1, **characterized in that**; it comprises a movable hinge (308) enabling clamping of said tube-yoke (200) during machining.

5. An apparatus (300) according to Claim 1, **characterized in that**; it comprises a pressure spring (306) ensuring that the tube-yoke (200) remains at the center from the lug axis, by applying thrust pressure on said movable hinge (308).

6. An apparatus (300) according to Claim 1, **characterized in that**; it comprises a fixed hinge (307) providing connection between said centering part (302) and the movable hinge (308).

7. An apparatus (300) according to Claim 1, **characterized in that**; it comprises lower horizontal connection components (310) fixing said centering part (302) on the main body (301) on the horizontal axis.
